(19) **Europäisches Patentamt**

**European Patent Office**

**Office européen des brevets**

(11) Veröffentlichungsnummer: **0 241 884 B1**

(12) # EUROPÄISCHE PATENTSCHRIFT

(45) Veröffentlichungstag der Patentschrift: **02.01.92**

(21) Anmeldenummer: **87105375.7**

(22) Anmeldetag: **10.04.87**

(51) Int. Cl.⁵: **B65G 65/48**

(54) **Austragevorrichtung für Schüttgut.**

(30) Priorität: **16.04.86 DE 3612855**

(43) Veröffentlichungstag der Anmeldung:
**21.10.87 Patentblatt 87/43**

(45) Bekanntmachung des Hinweises auf die
Patenterteilung:
**02.01.92 Patentblatt 92/01**

(84) Benannte Vertragsstaaten:
**AT BE CH DE ES FR GB GR IT LI LU NL SE**

(56) Entgegenhaltungen:
**DE-B- 1 781 419**
**DE-B- 1 940 714**
**GB-A- 1 175 937**

(73) Patentinhaber: **Meyer, Hans Jürgen**
**Breitfeldstrasse 18**
**W-6625 Püttlingen(DE)**

(72) Erfinder: **Meyer, Hans Jürgen**
**Breitfeldstrasse 18**
**W-6625 Püttlingen(DE)**

(74) Vertreter: **Leyh, Hans, Dr,-Ing.**
**Patentanwälte Dr.rer.nat.Dipl.-Chem. Thomas**
**Berendt Dr.-Ing. Hans Leyh Innere Wiener**
**Strasse 20**
**W-8000 München 80(DE)**

## Beschreibung

Die Erfindung betrifft eine Austragevorrichtung nach dem Oberbegriff des Anspruchs 1.

Eine solche Vorrichtung ist bekannt aus der DE-B-19 40 714.

Bei dieser bekannten Austragevorrichtung sind die inneren Enden der schwenkbaren Räumarme durch einen längs verstellbaren Zuganker miteinander verbunden, um die Eingriffstiefe der Räumarme in das Schüttgut verändern zu können.

Eine Einschwenkbarkeit der Räumarme zur Mitte der Austragevorrichtung, um die Räumarme zum Zwecke der Wartung zugänglich zu machen, ist bei dieser bekannten Austragevorrichtung nicht vorgesehen.

Wenn jedoch die Räumarme im Schüttgutbehälter zum Beispiel durch übergroße Körnung des Schüttgutes oder durch Fremdkörper blockiert sind oder wenn das freie äußere Ende der Räumarme, das den stärksten Beanspruchungen ausgesetzt ist, verschleißbedingt beschädigt wird, sollten die Räumarme zu. Wartungszwecken oder zur Behebung des Störfalles zugänglich sein.

Es ist daher Aufgabe der Erfindung, eine Austragevorrichtung der eingangs genannten Art so weiterzubilden, daß der Räumarm oder wenigstens sein freies äußeres Ende auch bei gefülltem Schüttgutbehälter mit möglichst geringem Aufwand zugänglich gemacht werden kann.

Nach der Erfindung wird dies erreicht durch die Merkmale im kennzeichnenden Teil des Anspruchs 1.

Diese Merkmale ermöglichen es, die Räumarme allein durch eine Drehung derselben um die Mittelachse in einer Drehrichtung entgegengesetzt zu ihrer Arbeitsdrehrichtung zur Mitte des Schüttgutbehälters in den schüttgutfreien Raum unterhalb des Staukonus zu schwenken, wodurch sie für Wartungszwecke leichter zugänglich gemacht sind.

Weitere Merkmale der Erfindung ergeben sich aus den Unteransprüchen.

Die Erfindung wird nachstehend an Beispielen unter Bezugnahme auf die beigefügte Zeichnung näher erläutert. Darin zeigt:

Figur 1     eine Seitenansicht einer Ausführungsform einer Austragevorrichtung bei einem Schüttgutbehälter mit teilweise aufgeschnittenem Schüttgutbehälter,

Figur 2     eine Draufsicht auf die Austragevorrichtung nach Figur 1,

Figur 3     eine Figur 1 ähnliche Ansicht einer Ausführungsvariante einer Austragevorrichtung, und

Figur 4     eine Draufsicht auf die Austragevorrichtung von Figur 3.

In den Figuren der Zeichnung sind gleiche oder ähnliche Teile mit denselben Bezugszeichen versehen.

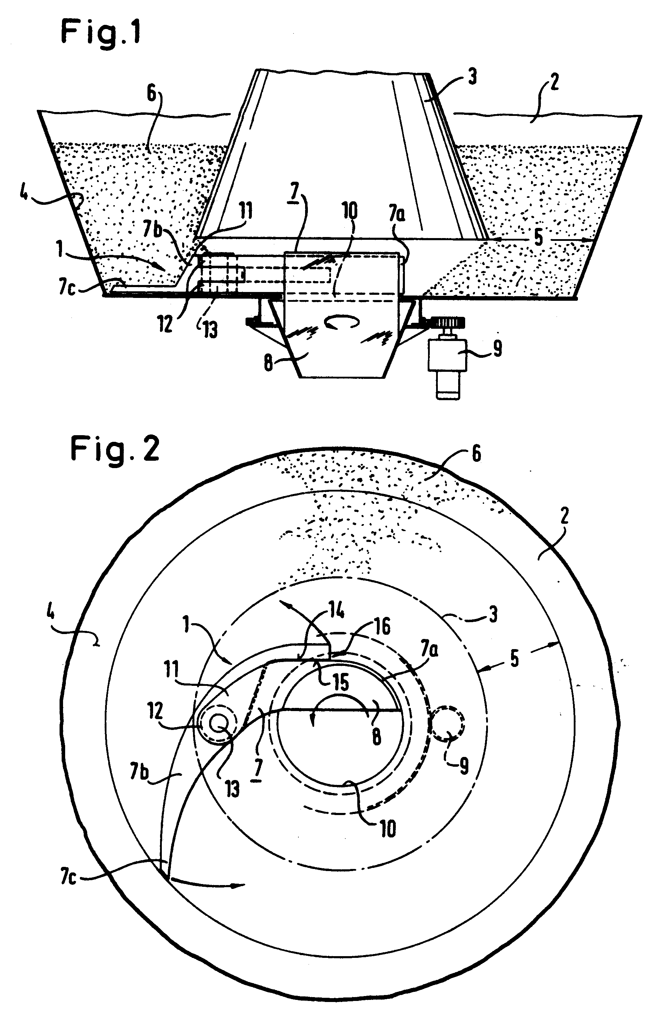

Unter Bezugnahme auf die Figuren 1 und 2 wird eine erste Ausführungsform einer Austragevorrichtung erläutert. Die Austragevorrichtung, die insgesamt mit 1 bezeichnet ist, ist in der Nähe des Bodens eines Schüttgutbehälters 2, wie eines Silos, mittig angeordnet. Oberhalb der Austragevorrichtung 1 und in einem Abstand von dieser ist ebenfalls mittig ein Staukonus 3 angeordnet, so daß sich zwischen der Innenwand 4 des Schüttgutbehälters 2 und der Außenwand des Staukonus ein Austragespalt 5 bildet, der mit Schüttgut 6 gefüllt ist. In diesen Austragespalt ragt ein insgesamt mit 7 bezeichneter Räumarm, der an einer Lagersäule 8 befestigt ist, und die mittels wenigstens eines Antriebsmotors 9, wie eines Getriebemotors oder dergleichen, in Drehung versetzt wird. Der Räumarm 7 ist drehfest mit der Lagersäule 8 verbunden und er führt eine Drehbewegung aus. Bei dieser Drehung des Räumarms 7 gleitet das auszutragende Schüttgut der in dem Austragespalt gebildeten Schüttgutböschung am Räumarm entlang und gelangt dann zu einer mittung des Räumarms 7 ist in den Figuren 1 und 2 mit einem Pfeil eingetragen.

Wie insbesondere aus Figur 2 zu erkennen ist, ist der Räumarm 7 zweiteilig ausgelegt und hat einen festen Teil 7a, der drehfest mit der Lagersäule 8 verbunden ist und einen schwenkbaren Teil 7b, der das äußere freie Ende 7c des Räumarms 7 aufweist. In der in Figur 2 in der Draufsicht gezeigten Arbeitsstellung bilden die beiden Räumarmteile 7a und 7b eine sichelartig ausgebildete Gesamtform, und das äußere Ende 7c ist als Spitze ausgebildet, die zur Innenwand 4 des Schüttgutbehälters 2 in der Arbeitsstellung des Räumarms 7 weist. Wie sich insbesondere aus Figure 1 in Verbindung mit Figur 2 entnehmen läßt, ist das äußere Ende 11 des drehfesten Teils 7a in Form einer Lagergabel 12 ausgebildet, die den schwenkbeweglichen Teil 7b des Räumarms 7 übergreift. Als Schwenkachse ist durch die fluchtenden öffnungen der Lagergabel 12 und des dazwischenliegenden schwenkbaren Teils 7b ein Schwenkbolzen 13 gesteckt. Ferner weist das dem drehfesten Teil 7a zugewandte Ende des schwenkbaren Teils 7b eine Anschlagfläche 14 und die entsprechend gegenüberliegende Fläche des drehfesten Teils 7c eine hierzu komplementär ausgebildete Anschlagfläche 15 auf. Die beiden Anschlagflächen 14 und 15 liegen gegeneinander an, um den Räumarm 7 in seiner Arbeitsstellung zu fixieren. Diese Anschlagflächen 14 und 15 bilden daher einen schematisch mit 16 bezeichneten Anschlag.

Wenn die Drehrichtung der Austragevorrichtung 1 umgekehrt wird, so daß das drehfest mit dem Antrieb verbundene Teil 7a sich gegensinnig zu der Arbeitsdrehrichtung dreht, so bietet das auszutragende Schüttgut im Austragespalt 5 einen Wilderstand und hierdurch wird bewirkt, daß sich der schwenkbare Teil 7b in Richtung zur Mitte des Schüttgutbehälters 2 und in den Raum unter den Staukonus 3 schwenkt. Somit kommt das äußere freie Ende 7c des Räumarms 7 in dem schüttgutfreien Raum unterhalb des Staukonus 3 zu liegen, so daß dieser Räumarmteil zu Inspektionszwecken und zu Wartungszwecken beispielsweise zugänglich ist. Der bis zu der Lagergabel 12 sich erstrekkende drehfeste Teil 7a liegt ohnedies im schüttgutfreien Raum unter dem Staukonus 3, so daß die Schwenklagerung im Staukonus 3 geschützt untergebracht ist und ohne eine Verschwenkung des schwenkbaren Teils 7b zugänglich ist. Die Schwenkbewegung des schwenkbaren Teils 7b ist mit Pfeilen in Figur 2 angedeutet.

Wenn nach Beendigung der Inspektions- oder Wartungsarbeiten der mit dem Antrieb drehfest verbundene Teil 7a Räumarms 7 wieder in Arbeitsdrehrichtung gedreht wird, so wird der schwenkbewegliche Teil 7b selbsttätig durch das auszutragende Material im Austragespalt 5 in Richtung nach außen, d.h. in Richtung auf die Innenwand 4 des Schüttgutbehälters 2, geschwenkt, bis die den Anschlag 16 bildenden Anschlagflächen 14 und 15 der beiden Teile 7a und 7b des Räumarms 7 aneinander anliegen. Nunmehr kann die vom Antrieb aufgebrachte Antriebskraft über die nunmehr starre Verbindung der beiden Räumarmteile 7a und 7b übertragen werden, und die Austragevorrichtung 1 erfüllt bestimmungsgemäß ihren Zweck, jedem mit Hilfe des umlaufenden Räumarms 7 das auszutragende Gut zur Austrageöffnung 10 gefördert wird. Bei der Austragevorrichtung 1 nach den Figuren 1 und 2 wird diese durch den außerhalb und unterhalb des Schüttgutbehälters 2 angeordneten Antrieb angetrieben.

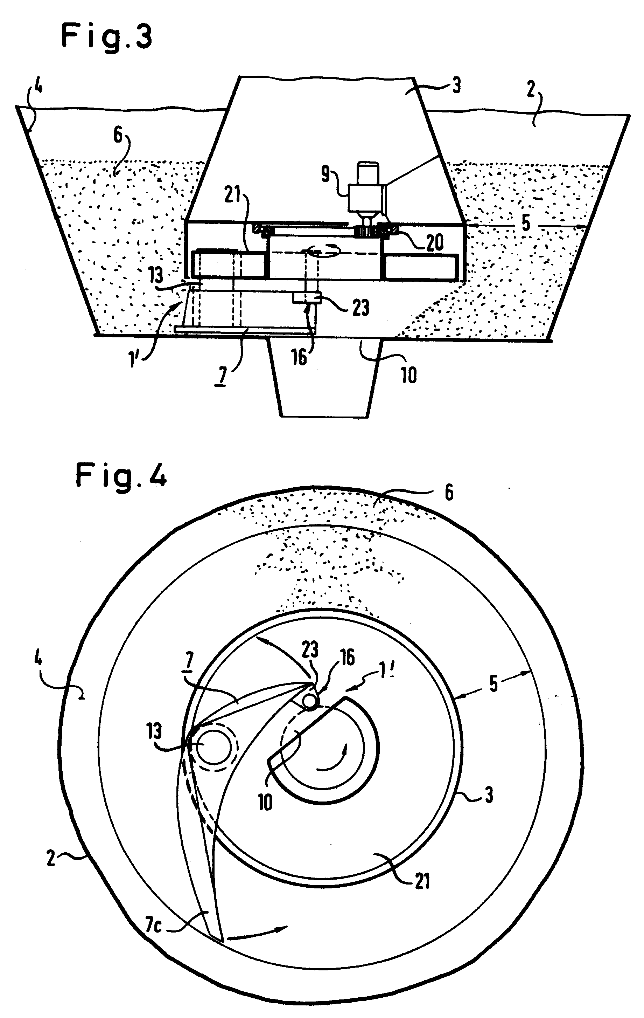

Anhand den Figuren 3 und 4 wird eine Ausführungsvariante einer Austragevorrichtung 1′ gezeigt. Bei dieser Austragevorrichtung 1′ ist der Antrieb mit dem Antriebsmotor 9 im Innenraum des Staukonus 3 angeordnet. Über einen Kugeldrehkranz 20 wird ein Tragring 21 drehangetrieben, der zweckmäßigerweise als Kastenträger 22 ausgebildet ist und die Schwenkachse, d.h. der Schwenkbozen 13, ist in dem Tragring 21 gelagert. Das andere Ende des Schwenkbolzens 13 ragt in den Räumarm 7 und ferner ist als Anschlag 16 zur Fixierung der Arbeitsstellung des Räumarms 7 eine Nocke 23 befestigt. Bei dieser Ausführungsvariante ist der Räumarm 7 einteilig ausgelegt und insgesamt um den Schwenkbolzen 13 schwenkbeweglich gelagert. Wie bei der vorangehenden Ausführungsform schwenkt sich der Räumarm 7 um den Schwenkbolzen 13 in Richtung nach innen und in den schüttgutfreien Raum unterhalb des Staukonus 3, wenn eine Umkehrung der Drehrichtung zur Arbeitsdrehrichtung erfolgt. In diesem eingeschwenkten Zustand ist dann der Räumarm und insbesondere das äußere freie Ende 7c desselben zugänglich, das den stärksten Beanspruchungen und somit dem stärksten Verschleiß ausgesetzt ist. Ähnlich sie bei der vorangehenden Ausführungsform schwenkt sich der Räumarm 7 selbsttätig wieder nach außen in Richtung zur Innenwand 4 des Schüttgutbehälters 2, wenn der Antrieb wiederum in Arbeitsdrehrichtung erfolgt und dann liegt in der endgültigen Arbeitsstellung die Nocke 23 am inneren Ende des Räumarms 7 an, so daß der Räumarm 7 in seiner endgültigen Arbeitsstellung gehalten ist. Die Arbeitsweise dieser Austragevorrichtung 1′ stimmt weitgehend mit den vorangehend beschriebenen Einzelheiten überein.

Obgleich nicht näher dargestellt ist, kann die Austragevorrichtung 1 oder 1′ auch mehr als einen Räumarm 7, wie z.B. zwei oder drei Räumarme, aufweisen. Auch diese können natürlich um eine Schwenkachse wenigstens teilswiese schwenkbar gelagert sein.

## Patentansprüche

1. Austragevorrichtung am Boden eines Schüttgutbehälters (2), der eine zentrale Austrageöffnung (10) im Boden und einen Staukonus (3) oberhalb der Austrageöffnung (10) aufweist, mit wenigstens einem Räumarm (7) zum Austragen des Schüttgutes durch die Austrageöffnung (10), der in seiner Arbeitsstellung mittels eines Antriebes eine Drehbewegung um die Mittelachse des Schüttgutbehälters (2) in Arbeitsdrehrichtung ausführt, wobei der Räumarm (7) um eine im Abstand von der Mittelachse liegende und parallel zu derselben verlaufende Schwenkachse (13) schwenkbar ist, dadurch gekennzeichnet, daß der Räumarm (7) bei einer Gegendrehung zur Arbeitsdrehrichtung um die Schwenkachse (13) zur Mitte des Schüttgutbehälters (2) in den schüttgutfreien Raum unterhalb des Staukonus (3) geschwenkt wird.

2. Austragevorrichtung nach Anspruch 1, **gekennzeichnet** durch einen Anschlag (16), der mit dem inneren Ende des Räumarms (7) zur Fixierung der Arbeitsstellung zusammenarbeitet.

3. Austragevorrichtung nach Anspruch 1 oder 2, dadurch **gekennzeichnet,** daß die Schwenkachse von einem Schwenkbolzen (13) gebildet wird.

4. Austragevorrichtung nach einem der Ansprüche 1 bis 3, dadurch **gekennzeichnet,** daß der Räumarm (7) zweiteilig ausgelegt ist, wobei ein der Behältermitte zugewandter, drehfester Teil (7a) mit dem Antrieb (9) verbunden und ein das freie äußere Ende (7c) umfassender, schwenkbarer Teil (7b) um die Schwenkachse schwenkbar gelagert ist.

5. Austragevorrichtung nach Anspruch 4 und 2, dadurch **gekennzeichnet,** daß der Anschlag (16) dadurch gebildet wird, daß das hintere Ende des schwenkbaren Teils (7b) des Räumarms (7) am drehfesten Räumarmteil (7a) anliegt.

6. Austragevorrichtung nach Anspruch 4 oder 5 in Verbindung mit Anspruch 3, dadurch **gekennzeichnet,** daß der Schwenkbolzen (13) in einer vom drehfesten Teil (7a) gebildeten Lagergabel (12) aufgenommen ist, die den schwenkbaren Teil (7b) übergreift.

7. Austragevorrichtung nach einem der Ansprüche 1 bis 3, dadurch gekennzeichnet, daß der Antrieb für den Räumarm (7) im Innenraum des Staukonus (3) angeordnet ist und die Schwenkachse in einem drehangetriebenen Tragring (21) gelagert ist.

8. Austragevorrichtung nach Anspruch 7, dadurch **gekennzeichnet,** daß der Tragring (21) an einem Kugeldrehkranz (20) befestigt ist, der von wenigstens einem Antriebsmotor (9) angetrieben wird.

9. Austragevorrichtung nach Anspruch 7 oder 8, dadurch **gekennzeichnet,** daß der Tragring (21) als Kastenträger (22) ausgebildet ist.

10. Austragevorrichtung nach einem der Ansprüche 7 bis 9, dadurch **gekennzeichnet,** daß am Tragring (21) als Anschlag (16) eine Nocke (23) befestigt ist, die den Räumarm (7) in seiner Arbeitsstellung hält.

11. Austragevorrichtung nach einem der Ansprüche 7 bis 10, dadurch **gekennzeichnet,** daß der Räumarm (7) einteilig ausgelegt ist.

12. Austragevorrichtung nach einem der vorangehenden Ansprüche, dadurch **gekennzeichnet,** daß der Räumarm (7) sichelförmig gekrümmt ist und sein freies äußeres Ende (7c) als Spitze ausgebildet ist.

13. Austragevorrichtung nach einem der vorangehenden Ansprüche, dadurch **gekennzeichnet,** daß zwei oder mehr Räumarme (7) vorgesehen sind.

## Claims

1. Discharge device on the floor of a bulk goods container (2), which has a central discharge opening (10) in the floor and a collecting cone (3) above the discharge opening (10) with at least one clearing arm (7) for discharging the bulk goods through the discharge opening (10), which in its operating position carries out a rotary movement around the central axis of the bulk goods container (2) in the operating rotary direction, where the clearing arm (7) can swivel around a swiveling axle (13) lying at a distance from the central axis and parallel to the same, thereby characterized that the clearing arm (7) is swivelled around the swivelling axle (13) with a counter rotation to the operating rotary direction to the middle of the bulk goods container (2) into the space below the collecting cone (3).

2. Discharge device according to claim 1, **thereby characterized** by a stop (16) which works together with the inner end of the clearing arm (7) to fix the operating position.

3. Discharge device according to claim 1 or 2, **thereby characterized** that the swivelling axle is formed by a swivelling bolt (13).

4. Discharge device according to one of the claims 1 to 3, **thereby characterized,** that the clearing arm (7) is designed in two parts, where one is a a rigid part (7a) facing the container middle connected with the drive (9) and the other the swivellable part (7b) enveloping the free outer end is supported to swivel around the swivelling axle.

5. Discharge device according to claim 4 and 2, thereby **characterized,** that the stop (16) is shaped so that the rear end of the swivellable part (7b) of the clearing arm (7) lies on the rigid clearing arm part (7a).

6. Discharge device according to claim 4 or 5 in combination with claim 3, thereby **characterized** that the swiveling bolt (13) is accommodated in a bearing fork (12), which laps over the swivellable part (7b).

7. Discharge device according to one of the claims 1 to 3, thereby characterized that the drive for the clearing arm (7) is arranged in the interior of the collecting cone (3) and the swivelling axle is supported in a rotary driven bearing ring (21).

**8.** Discharge device according to claim 7, thereby characterized that the bearing ring (21) is fastened on a ball ring mount (20) which is driven by at least one drive motor (9).

**9.** Discharge device according to claim 7 or 8, thereby **characterized** that the bearing ring (21) is formed as box girder.

**10.** Discharge device according to one of the claims 7 to 9, thereby characterized that a cam (23) is attached on the bearing ring (21) as stop (16), which holds the clearing arm (7) in its operating position.

**11.** Discharge device according to one of the claims 7 to 10, thereby **characterized** that the clearing arm (7) is designed in one part.

**12.** Discharge device according to one of the preceding claims, thereby **characterized** that the clearing arm is shaped like a crescent and its free outer end (7c) is designed as tip.

**13.** Discharge device according to one of the preceding claims thereby **characterized** that two or more clearing arms (7) are provided.

**Revendications**

**1.** Equipement de déversement situé au fond d'un conteneur à pulvérulents (2) présentant une ouverture centrale de sortie (10) au fond et un cône d'accumulation (3) au-dessus de l'ouverture de sortie (10), avec au moins un bras de dragage (7) pour sortir les pulvérulents par l'ouverture de sortie (10), bras qui dans sa position de travail à l'aide d'un entraînement effectue un mouvement rotatif autour de l'axe central du conteneur à pulvérulents (2) et où le bras de dragage (7) est pivotable autour d'un axe de pivotement (13) se trouvant distant de l'axe central et parallel à celui-ci, caractérisé en ce que le bras de dragage (7), lors d'une rotation contraire au sens de rotation de travail est pivoté autour de l'axe de pivotement (13), vers le milieu du conteneur à pulvérulents (2), dans la zone sans pulvérulents, au-dessous du cône d'accumulation (3).

**2.** Equipement de déversement selon la revendication 1, caractérisé en ce qu'une butée (16) collabore avec l'extrémité interne du bras de dragage (7) pour fixer la position de travail.

**3.** Equipement de déversement selon la revendication 1 ou 2, caractérisé en ce que l'axe de pivotement est constitué par un boulon de pivotement (13).

**4.** Equipement de déversement selon une des revendications 1 à 3, caractérisé en ce que le bras de dragage (7) est en deux parties et qu'une partie fixe du point de vue rotation et dirigée vers le centre du conteneur (7a) est reliée avec l'entraînement (9) et qu'une partie pivotable (7b) englobant l'extrémité libre externe (7c) est supportée de manière pivotable autour de l'axe de pivotement.

**5.** Equipement de déversement selon la revendication 4 et 2, caractérisé en ce que la butée (16) est formée par le fait que l'extrémité arrière de la partie pivotable (7b) du bras de dragage (7) repose à la partie rigide du bras de dragage (7a).

**6.** Equipement de déversement selon la revendication 4 ou 5, en liaison avec la revendication 3, caractérisé en ce que le boulon de pivotement (13) est pris dans une fourchette de palier (12) constitué par la partie fixe (7a), fourchette passant vers la partie pivotable (7b).

**7.** Equipement de déversement selon une des revendications 1 à 3, caractérisé en ce que l'entraînement pour le bras de dragage (7) est logé dans la partie interne du cône d'accumulation (3) et que l'axe de pivotement est supporté par un anneau support entraîné en rotation (21).

**8.** Equipement de déversement selon la revendication 7, caractérisé en ce que l'anneau support (21) est fixé à une couronne à billes (20) entraînée par au moins un moteur d'entraînement (9).

**9.** Equipement de déversement selon la revendication 7 ou 8 caractérisé en ce que l'anneau support (21) est constitué sous forme d'un support à caisse (22).

**10.** Equipement de déversement selon une des revendications 7 à 9, caractérisé en ce que sur l'anneau support (21) et en tant que butée (16) est fixé un ensemble came (23) servant à maintenir dans la position de travail le bras de dragage (7).

**11.** Equipement de déversement selon une des revendications 7 à 10, caractérisé en ce que le bras de dragage (7) est prévu sous forme d'une seule pièce.

**12.** Equipement de déversement selon une des revendications précitées, caractérisé en ce que le bras de dragage (7) est courbé sous forme de faucille et que son extrémité libre extérieure (7c) présente la forme d'une pointe.

**13.** Equipement de déversement selon une des revendications précitées, caractérisé en ce que l'ensemble prévoit deux ou plusieurs bras de dragage (7).

Fig.1

Fig. 2

# Fig.3

# Fig.4